# EUROPÄISCHE PATENTSCHRIFT

(11) **EP 3 084 502 B1**
(45) Veröffentlichungstag und Bekanntmachung des Hinweises auf die Patenterteilung: **01.09.2021**
(21) Anmeldenummer: 14827438.4
(22) Anmeldetag: 19.12.2014
(51) Int. Cl.: G02B 21/00

(54) **MEHRFARBEN-SCANNING-MIKROSKOP**
MULTI-COLOR SCANNING MICROSCOPE
MICROSCOPE À BALAYAGE POLYCHROME

(30) Priorität: 19.12.2013 DE 102013022026
(43) Veröffentlichungstag der Anmeldung: 26.10.2016
(73) Patentinhaber: Carl Zeiss Microscopy GmbH, 07745 Jena (DE)
(72) Erfinder: BATHE, Wolfgang, 07743 Jena (DE)
(74) Vertreter: Schiffer, Axel Martin
(86) Internationale Anmeldenummer: PCT/EP2014/078880
(87) Internationale Veröffentlichungsnummer: WO 2015/092027

(56) Entgegenhaltungen:
- EP-A1- 2 053 442
- EP-A1- 2 053 447
- WO-A1-92/01966
- WO-A1-2013/020663
- DE-A1- 10 004 191
- US-A- 6 028 306
- US-A1- 2004 178 356
- US-A1- 2013 015 370
- None

## Beschreibung

Die vorliegende Erfindung betrifft ein Mehrfarben-Scanning-Mikroskop nach dem Oberbegriff des Anspruchs 1.

Solche Mehrfarben-Scanning-Mikroskope sind grundsätzlich bekannt und weisen folgende Komponenten auf: mindestens eine erste Lichtquelle zum Aussenden eines ersten Anregungsstrahlbündels mit erstem Anregungslicht einer ersten Wellenlänge und eine zweite Lichtquelle zum Aussenden eines zweiten Anregungsstrahlbündels mit zweitem Anregungslicht einer zweiten Wellenlänge, die von der ersten Wellenlänge verschieden ist, Einkoppelmittel zum Einkoppeln des ersten Anregungsstrahlbündels und/oder des zweiten Anregungsstrahlbündels in einen Anregungsstrahlengang und Optikmittel zum Leiten des ersten Anregungsstrahlbündels und des zweiten Anregungsstrahlbündels zu einer Probe und zum Leiten von von der Probe abgestrahltem Detektionslicht in einem Detektionsstrahlengang zu einer Detektionseinheit.

Die Optikmittel weisen dabei mindestens folgende Bestandteile auf: Mindestens einen ersten Hauptfarbteiler zum Trennen des ersten Anregungslichts und/oder des zweiten Anregungslichts einerseits von dem von der Probe abgestrahlten Detektionslicht andererseits, einen Scanner zum Abrastern der Probe mit mindestens dem ersten Anregungslicht und dem zweiten Anregungslicht, ein Mikroskopobjektiv zum Fokussieren des ersten Anregungslichts und des zweiten Anregungslichts auf oder in die Probe und zum Leiten des von der Probe abgestrahlten Detektionslichts in Richtung der Detektionseinheit.

Schließlich ist bei dem gattungsgemäßen Mehrfarben-Scanning-Mikroskop die Detektionseinheit zum Nachweisen des von der Probe abgestrahlten Detektionslichts vorhanden.

In der Fluoreszenzmikroskopie werden fluoreszierende Farbstoffe verwendet, mit denen sich Probenteile spezifisch färben lassen. Beispielsweise gibt es Farbstoffe, die im Wesentlichen nur den Zellkern färben. Andere Farbstoffe färben das vor allem das Zytoskelett. Durch diese spezifischen Färbungen lassen sich einzelne Probenteile beobachten, ohne dass dabei andere Probenteile sichtbar werden und stören. Häufig werden auch die verschieden gefärbten Probenteile im Mikroskop verschiedenfarbig dargestellt, so dass die Art der Probenteile durch die Farbe klar erkennbar wird. Eine grundlegende Aufgabenstellung ist, dass ein Fluoreszenzmikroskop die Farbstoffe möglichst gut voneinander trennen soll. Dazu kann einerseits das Anregungslicht geschickt gewählt werden. Alternativ oder ergänzend kann durch das detektierte Spektrum Einfluss auf die Trennung genommen werden. Nicht immer ist allerdings durch eine Wahl der Wellenlängen eine vollständige Trennung möglich.

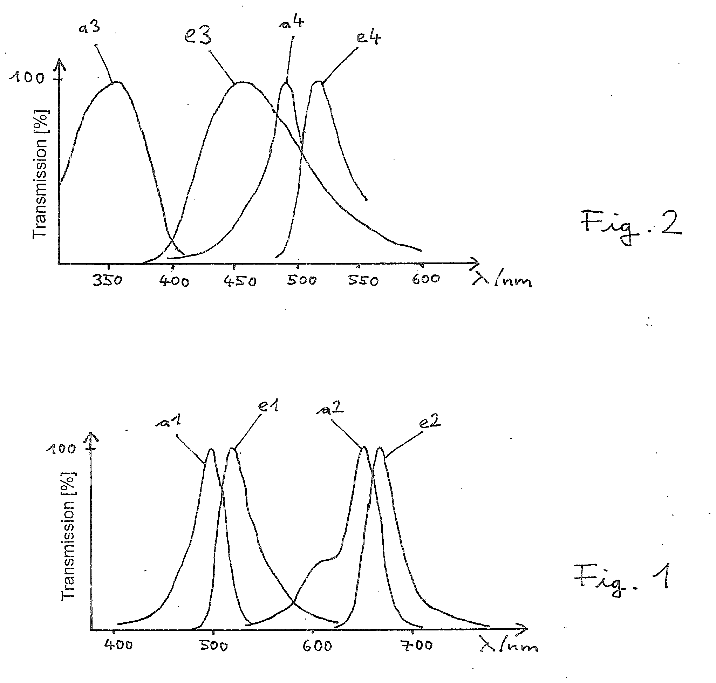

Dies soll an zwei Beispielen anhand von Figur 1 und Figur 2 erläutert werden. Dargestellt sind jeweils Anregungs- und Emissionsspektren, die auch als Detektionsspektren bezeichnet werden können, wobei jeweils die Intensität in beliebigen Einheiten gegen die Wellenlänge λ in nm aufgetragen ist.

Figur 1 zeigt das Anregungsspektrum a1 und das Detektions- oder Emissionsspektrum e1 des Farbstoffs Alexa 488 sowie und das Anregungsspektrum a2 und das Detektionsspektrum e2 des Farbstoffs Alexa 647. Wie aus Figur 1 ersichtlich, weisen insbesondere die Detektions- oder Emissionsspektren e1 und e2 nur einen geringen Überlapp auf. Das heißt, dass diese Farbstoffe gut getrennt werden können.

Die Anregung von Alexa 488 kann mit Licht der Wellenlänge 488 nm erfolgen. Bei dieser Wellenlänge wird der zweite Farbstoff Alexa 647 zwar geringfügig mitangeregt. Alexa 647 emittiert aber erst ab etwa 620 nm. Beschränkt man den Detektionskanal für Alexa 488 auf den Spektralbereich 489 nm bis 619 nm, so wird in diesem Kanal nur Alexa 488 nachgewiesen.

Alexa 647 andererseits läßt sich mit der Wellenlänge 642 nm effizient anregen. Beschränkt man nun hier die Detektion auf den Bereich 643 nm und länger, so wird nur Alexa 647 nachgewiesen, weil in diesem Bereich Alexa 488 nicht mehr emittiert.

Das zweite Beispiel betrifft die Farbstoffe DAPI und FITC, die sich bei gleichzeitiger Beobachtung nicht trennen lassen.

Figur 2 zeigt das Anregungsspektrum a3 und das Detektionsspektrum e3 des Farbstoffs DAPI sowie das Anregungsspektrum a4 und das Detektionsspektrum e4 des Farbstoffs FITC.

DAPI kann, wie in Figur 2 erkennbar, im UV-Bereich angeregt werden, ohne dass FITC angeregt wird. Wird FITC, beispielsweise bei 488 nm, angeregt, so kann DAPI im Bereich unterhalb von 488 nm detektiert werden, ohne dass hier FITC sichtbar wird. Die Emission des FITC befindet sich jedoch vollständig im Bereich der sehr breiten DAPI-Emission, so dass eine Detektion des FITC ohne DAPI nicht möglich ist.

Im Stand der Technik sind im Wesentlichen zwei Verfahren bekannt, die eine vollständige Trennung erlauben. Bei dem ersten dieser bekannten Verfahren wird die Aufnahme der Bilder für die verschiedenen Farbstoffe nacheinander durchgeführt. Dann kann beispielsweise zunächst nur der DAPI-Farbstoff aufgenommen werden. Weil bei der DAPI-Anregung der Farbstoff FITC nicht anregt wird, kann nun auch das gesamte DAPI-Spektrum detektiert werden, was im Hinblick auf das Signal-Zu-Rausch-Verhältnis vorteilhaft ist. In einer zweiten Aufnahme, die zeitlich vor oder nach der ersten erfolgt, wird FITC bei 488 nm angeregt. Weil diese Wellenlänge den Farbstoff DAPI nicht anregt, kann nun auch FITC unabhängig von DAPI detektiert werden. Durch eine solche sequenzielle Aufnahme können die Farbstoffe getrennt werden. Allerdings hat sich die Netto-Bildaufnahmezeit verdoppelt. Zusätzlich kann noch weitere Zeit, beispielsweise für das Schalten von Filtern, verloren gehen. Insgesamt erreicht dieses Verfahren also keine optimal kurze Bildaufnahmezeit.

Bei dem zweiten bekannten Verfahren kann eine nachträgliche Trennung der Farbstoffe bei simultaner Aufnahme erreicht werden. Bei diesem Verfahren, das auch als Entmischen bezeichnet wird, werden nicht die Signale der Farbkanäle direkt ausgewertet, sondern es werden deren Linearkombinationen als Bild verwendet, in denen jeweils nur noch ein Farbstoff auftaucht. Mathematisch ist das bei Abwesenheit von Fehlern immer möglich. Dieses Verfahren ist im Prinzip schnell, weil nur eine Aufnahme benötigt wird. Allerdings weist es ebenfalls systematische Nachteile auf. So wird, selbst wenn das Verfahren ideal arbeitet, das Signal-zu-Rausch-Verhältnis gegenüber getrennten Aufnahmen verschlechtert: Beispielsweise erzeugt der Farbstoff A im Kanal des Farbstoff B zwar kein Signal, liefert aber gleichwohl einen Beitrag zum Rauschen. Mit anderen Worten wird das Rauschniveau dort, wo etwas abgezogen wird, relativ größer. Außerdem gelingt die Trennung häufig nicht vollständig, etwa weil die angenommenen Spektren der Farbstoffe nicht genau stimmen und/oder weil bei der Aufnahme Nichtlinearitäten, beispielsweise gesättigte Bildbe-reiche, auftreten.

Scannende Mehrfarbenmikroskope sind beschrieben in US 2004/0178356 A1, WO 92/01966, EP 2 053 442 A1, EP 2 053 447 A1 und DE 100 04 191 A1. Ein Laser-Scanning-Mikroskop mit einem Beleuchtungsarray ist offenbart in WO 2013/020663 A1.

Als eine **Aufgabe** der vorliegenden Erfindung kann angesehen werden, ein Mehrfarben-Scanning-Mikroskop bereitzustellen, welches eine gute Trennung des von verschiedenen Farbstoffen abgestrahlten Lichts bei kurzen Messzeiten ermöglicht.

Diese Aufgabe wird durch das Mehrfarben-Scanning-Mikroskop mit den Merkmalen des Anspruchs 1 gelöst.

Das Mehrfarben-Scanning-Mikroskop der oben angegebenen Art ist erfindungsgemäß dadurch weitergebildet, dass die Einkoppelmittel und mindestens Teile der Optikmittel dergestalt eingerichtet und angeordnet sind, dass das erste Anregungsstrahlbündel mit der ersten Wellenlänge auf einen ersten Probenort und das zweite Anregungsstrahlbündel mit der zweiten Wellenlänge auf einen zweiten Probenort geleitet wird, der von dem ersten Probenort verschieden ist, und dass die Detektionseinheit zum Nachweisen des von dem ersten Probenort abgestrahlten Lichts einen ersten Detektor und zum Nachweisen des von dem zweiten Probenort abgestrahlten Lichts einen zweiten Detektor aufweist.

Bevorzugte Varianten des erfindungsgemäßen Mehrfarben-Scanning-Mikroskops, das auch als Multispot-Scanning-Mikroskop bezeichnet werden kann, werden im Folgenden, insbesondere mit Bezug auf die abhängigen Ansprüche sowie die beigefügten Figuren, beschrieben.

Als ein Grundgedanke der vorliegenden Erfindung kann angesehen werden, das Prinzip einer Multispotanregung mit demjenigen einer Mehrfarbenmikroskopie zu kombinieren.

Als wesentlicher Vorteil wird durch diese Kombination erreicht, dass bei gegebener Scanzeit eines Scanning-Mikroskops die spektrale Trennung von verschiedenen Farbstoffen der Probe verbessert wird und dass bei geforderter oder notwendiger spektraler Trennung die Scanzeit reduziert wird.

Anregungslicht im Sinn der hier beschriebenen Erfindung ist elektromagnetische Strahlung, wobei insbesondere die infraroten, sichtbaren und ultravioletten Teile des Spektrums gemeint sind. Als Lichtquellen können prinzipiell alle Strahlungsquellen verwendet werden, die die erforderliche elektromagnetische Strahlung mit der gewünschten Intensität bereitstellen. Besonders bevorzugt werden Laser, beispielsweise Argon-Ionen-Laser mit einer Wellenlänge von 488 nm oder DPSS-Laser mit einer Wellenlänge von 561 nm, verwendet. Prinzipiell können aber auch Leuchtdioden oder andere Leuchtmittel verwendet werden.

Besonders zweckmäßig sind vor den Detektoren konfokale Blenden angeordnet, so dass das Mehrfarben- oder Multispot-Scanning-Mikroskop ein konfokales Mikroskop ist, mit allen, prinzipiell bekannten Vorteilen und Eigenschaften.

Als konfokal wird eine Blende bezeichnet, wenn sie in oder in der Nähe einer konfokalen Ebene positioniert ist. Unter einer konfokalen Ebene wird eine zu einer probenseitigen Brennebene des Mikroskopobjektivs optisch konjugierte Ebene des Detektionsstrahlengangs bezeichnet. Eine konfokale Blende vor einem Detektor beschränkt die Lichtaufnahme dieses Detektors auf ein kleines Zielvolumen am Probenort.

Als Detektoren können prinzipiell alle Detektoren verwendet werden, welche für die nachzuweisende elektromagnetische Strahlung hinreichend empfindlich sind und ein ausreichend gutes Signal-zu-Rausch-Verhältnis aufweisen. Grundsätzlich können Halbleiterdetektoren hierfür verwendet werden. Weil bei dem Haupteinsatzbereich der Fluoreszenzmikroskopie die Zählraten vergleichsweise klein sind, werden aber sehr häufig Photomultiplier verwendet.

Außerdem können der erste und gegebenenfalls weitere Hauptfarbteiler Teil der Einkoppelmittel sein oder die Einkoppelmittel bilden.

Bei einem besonders bevorzugten Ausführungsbeispiel sind Einkoppelmittel vorhanden zum Einkoppeln des ersten Anregungsstrahlbündels in einem ersten Winkel in den Anregungsstrahlengang und zum Einkoppeln des zweiten Anregungsstrahlbündels in den Anregungsstrahlengang in einem zweiten Winkel, der sich von dem ersten Winkel unterscheidet. Das erste Anregungslicht und das zweite Anregungslicht können so räumlich aufgetrennt werden. Prinzipiell können als Einkoppelmittel alle optischen Komponenten verwendet werden, mit denen das erste und das zweite Anregungslicht und gegebenenfalls weitere spektrale Komponenten, also weiteres Anregungslicht, insbesondere wellenlängenspezifisch, in den Anregungsstrahlengang eingekoppelt werden. Grundsätzlich können hierfür beugende und/oder brechende Komponenten verwendet werden. Besonders bevorzugt werden Spiegel oder halbdurchlässige Spiegel verwendet.

Grundsätzlich kann die Erfindung mit einem Aufbau verwirklicht werden, bei dem nur ein Hauptfarbteiler vorhanden ist. Bei diesen Varianten müssen für unterschiedliche Kombinationen von Lasern jeweils auch unterschiedliche Hauptfarbteiler bereitgehalten werden. Der Hauptfarbteiler kann zum Bereitstellen der gewünschten spektralen Eigenschaften vorteilhaft mehrere Notch-Filter aufweisen.

Erfindungsgemäß ist neben dem ersten Hauptfarbteiler ein zweiter Hauptfarbteiler vorhanden und das erste Anregungsstrahlbündel wird mit dem ersten Hauptfarbteiler und das zweite Anregungsstrahlbündel wird mit dem zweiten Hauptfarbteiler in den Anregungsstrahlengang eingekoppelt. Diese Variante hat den Vorteil, dass nicht für jede Kombination von verschiedenen Laserquellen ein spezieller Hauptfarbteiler notwendig ist.

Eine weitere Variante, bei der verschiedene Anregungslichtquellen prinzipiell beliebig miteinander kombiniert werden können, ist dadurch gekennzeichnet, dass der erste Hauptfarbteiler als Einkoppelmittel verwendet wird und mindestens zum Einkoppeln des ersten Anregungsstrahlbündels in den Anregungsstrahlengang ein erstes Segment und zum Einkoppeln des zweiten Anregungsstrahlbündels in den Anregungsstrahlengang ein zweites Segment aufweist. Der erste Hauptfarbteiler ist bei diesem Ausführungsbeispiel also eine segmentierte Komponente und beinhaltet im Prinzip für jede Farbe des Anregungslichts einen separaten Hauptfarbteiler. Prinzipiell können bei solch einem Aufbau die verschiedenen Anregungslichtquellen zusammen mit ihrem jeweils zugeordneten Segment des Hauptfarbteilers in den Strahlengang hinein bewegt, beispielsweise geschwenkt, und aus diesem heraus bewegt werden.

Die Anzahl der verschiedenen einzusetzenden Farben des Anregungslicht ist bei dem erfindungsgemäßem Mikroskop nicht prinzipiell, sondern nur durch den praktisch zur Verfügung stehenden Bauraum beschränkt. Beispielsweise kann also bei weiteren vorteilhaften Varianten mindestens eine weitere Lichtquelle vorhanden sein zum Aussenden eines weiteren Anregungslichtbündels mit weiterem Anregungslicht, dessen Wellenlänge oder Wellenlängen von der ersten Wellenlänge und der zweiten Wellenlänge verschieden ist oder sind und für das oder die weiteren Anregungslichtbündel können dann zweckmäßig weitere Einkoppelmittel vorhanden sein, die zusammen mit mindestens Teilen der Optikmittel dergestalt eingerichtet und positioniert sind, dass das oder die weiteren Anregungslichtbündel auf weitere jeweils unterschiedliche Probenorte fokussierbar ist oder sind. Dieser Probenort oder diese Probenorte ist beziehungsweise sind verschieden von dem ersten Probenort, auf den das erste Anregungslichtbündel fokussierbar ist, und dem zweiten Probenort auf den das zweite Anregungslichtbündel fokussierbar ist.

Zweckmäßig ist in diesem Zusammenhang auch, wenn zum getrennten Nachweisen von Detektionslicht, welches von verschiedenen Probenbereichen zurückgestrahlt wird, mindestens eine der Anzahl der Anregungsstrahlbündel entsprechende Anzahl von Detektoren vorhanden ist.

Grundsätzlich sind Aufbauten bevorzugt, bei denen ein und derselbe Scanner zum Scannen der Probe mit den verschiedenen Farben, also dem ersten, dem zweiten und gegebenenfalls weiterem Anregungslicht, verwendet wird.

Besonders vorteilhaft wird der Scanner in einer Pupille des Mikroskopobjektivs positioniert. Diese Anordnung, die auch als telezentrische Anordnung bezeichnet wird, hat den Vorteil, dass die Anregungsstrahlenbündel immer senkrecht auf die Probenebene fallen, wenn diese senkrecht zum optischen Strahlengang definiert ist.

Wegen des Versatzes der für die verschiedenen Farben örtlich verschiedenen Anregungsspots entsteht bei der Verwendung nur eines einzigen Scanners notwendigerweise auch ein örtlicher Versatz, der für die unterschiedlichen Farben aufgenommenen Bilder. Dieser Versatz kann prinzipiell mit einem Auswerterechner herausgerechnet werden.

Zweckmäßig ist, insbesondere um dieses Herausrechnen des Ortsversatzes für die mit den verschiedenfarbigen Anregungsspots erhaltenen Bilder zu bewerkstelligen, eine Auswerteeinheit vorhanden. Diese Auswerteeinheit kann allgemein dienen zum Auswerten der von den Detektoren gelieferten Messdaten.

Grundsätzlich sind die so erhaltenen Bilder aber im Vergleich zu den Bildern, die bei Anregung mit einem einzigen Anregungsspot erhalten werden, kleiner. Sie sind nämlich nur so groß wie der gemeinsame Überlapp aller mit verschiedenen Anregungsspots aufgenommenen Bilder.

Diese Nachteile können vermieden werden bei einer weiteren vorteilhaften Ausgestaltung der Erfindung, bei der für jedes in den Anregungsstrahlengang einzukoppelnde Anregungsstrahlbündel ein separater Scanner vorhanden ist.

Damit die für unterschiedliche Anregungsspots gewonnenen Bilder möglichst gut miteinander vergleichbar sind, sollten die vor den Detektoren verwendeten Lochblenden oder Pinholes möglichst gleich groß sein. Besonders bevorzugt werden variable Pinholes verwendet. Ein Variationsverhältnis kann dabei typischerweise 1:60 betragen. Beispielsweise kann der Durchmesser dann variiert werden zwischen 10 und 600 µm. Die Genauigkeit der Einstellung relativ zum Durchmesser ist dabei typischerweise kleiner als 10% des Durchmessers. Darüber hinaus wird an die Lochblenden oder Pinholes eine Geometrieanforderung gestellt, beispielsweise sollen runde Lochblenden unabhängig vom Durchmesser immer möglichst rund sein beziehungsweise bleiben. Prinzipiell können auch quadratische Pinholes eingesetzt werden. Diese sollten dann unabhängig von der Seitenlänge des Quadrats immer möglichst genau eine Quadratform aufweisen. Exzentrizitäten sollten dabei kleiner sein als 10% der Seitenlänge des Quadrats oder des Durchmessers einer kreisförmigen Lochblende.

Wenn Multi-Pinhole-Anordnungen eingesetzt werden, müssen die genannten Anforderungen für alle Pinholes gleichzeitig erfüllt werden. Wenn also, was häufig zweckmäßig und bevorzugt ist, die Durchmesser der Pinholes variiert werden sollen, so muss dabei sichergestellt werden, dass die Durchmesser sämtlicher Pinholes möglichst synchron verstellbar sind.

Prinzipiell können auch unabhängig voneinander einstellbare einzelne Pinholes verwendet werden. Dann muss der Gleichlauf kalibriert werden.

Bei dem erfindungsgemäßen Mikroskop tritt das von dem ersten Probenort abgestrahlte Licht und das von dem zweiten Probenort abgestrahlte Licht, insbesondere allgemein das von den unterschiedlichen beleuchteten Probenorten abgestrahlte Licht, durch ein und dieselbe gemeinsame Lochblende oder durch ein und dasselbe gemeinsame, insbesondere konfokale, Pinhole hindurch. Dadurch wird der Vorteil erreicht, dass der Gleichlauf bei einer Verstellung des Pinholes für sämtliche Teilstrahlengänge für die unterschiedlichen beleuchteten Probenorte naturgemäß automatisch gegeben ist, weil nur ein einziges Pinhole verstellt werden muss. Demgemäß sind weder aufwändige, gemeinsam verstellbare Mehrfach-Pinholes noch mehrere, jeweils einzeln verstellbare teure Einzelpinholes notwendig. Eine übergreifende Kalibrierung ist auch nicht mehr notwendig.

Die Begriffe Lochblende und Pinhole werden im Rahmen dieser Anmeldung synonym verwendet.

Das gemeinsame Pinhole kann vorteilhaft in einer Zwischenbildebene des Detektionsstrahlengangs positioniert sein. Besonders bevorzugt kann das gemeinsame Pinhole vor, bevorzugt unmittelbar vor, dem ersten und dem zweiten, insbesondere allgemein vor den unterschiedlichen verwendeten Detektoren, positioniert sein. Das Pinhole, durch welches das von den unterschiedlichen beleuchteten Probenorten abgestrahlte Licht hindurchtritt, wird auch als gemeinsames Pinhole bezeichnet.

Um die geeigneten Strahlengänge bereitzustellen, die es erlauben, die von den unterschiedlichen Probenorten kommenden Lichtbündel durch ein und dasselbe Pinhole zu führen, sind Varianten des erfindungsgemäßen Mikroskops von Vorteil, bei denen für jedes Anregungslichtbündel im Anregungsstrahlengang und/oder für jedes Detektionslichtbündel im Detektionsstrahlengang jeweils separate optische Mittel, insbesondere mindestens eine separate Linse, vorhanden ist. Die optischen Achsen der separaten, für die unterschiedlichen Anregungslichtbündel und/oder Detektionslichtbündel verwendeten optischen Mittel, insbesondere der separaten Linsen, sind bevorzugt zueinander parallel verschoben.

Als Detektionslichtbündel wird dabei das von einem bestimmten beleuchteten Probenort abgestrahlte Detektionslicht bezeichnet.

Die Herstellung solcher Linsen ist im Vergleich zur Herstellung von gemeinsam verstellbaren Mehrfach-Pinholes einfacher und weniger aufwändig. Beispielsweise sind Brennweitentoleranzen im kleinen einstelligen Prozentbereich Standard. Die optische Größe eines von jedem Teilstrahl "gesehenen" Pinholes schwankt dann ebenfalls nur in diesem Bereich. Besonders bevorzugt können Linsen verwendet werden, die auf einem gemeinsamen Träger lithografisch hergestellt sind. Solche Herstellprozesse erlauben ebenfalls hohe Genauigkeiten.

Bei bevorzugten Ausgestaltungen des erfindungsgemäßen Mikroskops sind demgemäß, insbesondere an äquivalenten Orten des Anregungsstrahlengangs und/oder des Detektionsstrahlengangs, für die separaten Teilstrahlengänge für die einzelnen beleuchteten Probenorte die separaten Linsen auf einem gemeinsamen Träger lithografisch gefertigte Linsen.

Der Weg des Anregungslichts von der Lichtquelle oder den Lichtquellen bis zur Probe wird als Anregungsstrahlengang und, entsprechend, der Weg des Detektionslichts von der Probe bis zu dem Detektor oder den Detektoren als Detektionsstrahlengang bezeichnet.

Als separate Teilstrahlengänge des Anregungs- und/oder des Detektionsstrahlengangs werden die Anregungslichtbündel und die Detektionslichtbündel bezeichnet.

Die Verwendung eines gemeinsamen Pinholes überführt sozusagen die Genauigkeitsanforderung von der Mehrzahl von Pinholes, wo sie vergleichsweise aufwändiger zu realisieren ist, zu der Mehrzahl von separaten Linsen, die als solche leichter herzustellen sind.

Die wesentliche technische Wirkung der separaten Linsen besteht darin, dass diese von den unterschiedlichen Probenorten kommende Strahlenbündel zueinander parallele kollimierte Strahlenbündel umsetzt, die dann von einer Linse vor dem gemeinsamen Pinhole auf eben dieses gemeinsame Pinhole fokussiert werden können.

Weitere Vorteile und Merkmale der vorliegenden Erfindung werden im Folgenden mit Bezug auf die beigefügten Figuren erläutert. Hierin zeigen:
- Fig. 1:: Anregungs- und Detektionsspektren für die Fluoreszenzfarbstoffe Alexa 488 und Alexa 647;
- Fig. 2:: Anregungs- und Detektionsspektren für die Fluoreszenzfarbstoffe DAPI und FITC;
- Fig. 3:: ein Beispiel eines Mehrfarben-Scanning-Mikroskops nach dem Stand der Technik;
- Fig. 4:: ein weiteres Beispiel eines Mehrfarben-Scanning-Mikroskops, welches nicht unter den Anspruch fällt;

- Fig. 5:: ein weiteres Beispiel eines Mehrfarben-Scanning-Mikroskops, welches nicht unter den Anspruch fällt; und

- Figs.6 bis 8:: ein Ausführungsbeispiel eines erfindungsgemäßen Mehrfarben-Scanning-Mikroskops;

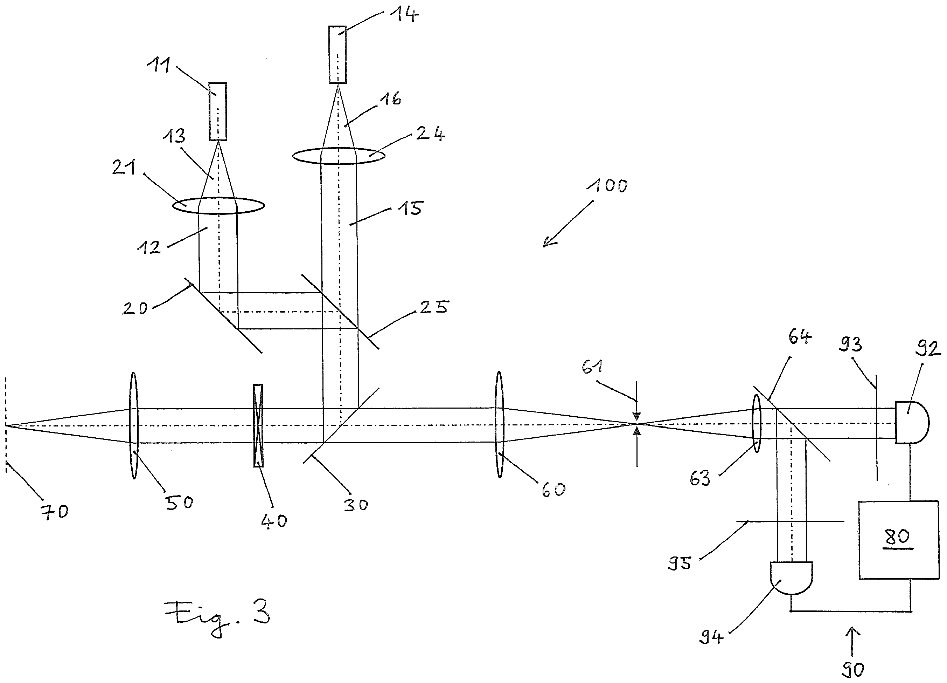

Ein gattungsgemäßes Scanning-Mikroskop wird mit Bezug auf Fig. 3 erläutert. Das dort gezeigte Scanning-Mikroskop 100 weist als wesentliche Bestandteile eine erste Lichtquelle 11 und eine zweite Lichtquelle 14, einen Hauptfarbteiler 30, einen Scanner 40, ein Mikroskopobjektiv 50 und eine Detektionseinheit 90 auf.

Die erste Lichtquelle 11 sendet ein erstes Anregungsstrahlbündel 12 mit erstem Anregungslicht 13 aus, welches eine erste Wellenlänge aufweist. Entsprechend sendet die zweite Lichtquelle 14 ein zweites Anregungsstrahlbündel 15 mit zweitem Anregungslicht 16 aus, das eine zweite Wellenlänge aufweist, die von der ersten Wellenlänge verschieden ist. Das erste Anregungslicht 13 der ersten Lichtquelle 11 wird über eine Linse 21 und einen Spiegel 20 als Einkoppelmittel 20 auf einen halbdurchlässigen Spiegel 25 als weiteres Einkoppelmittel 25 geleitet. Über diesen halbdurchlässigen Spiegel 25 wird das erste Anregungslicht 13 in einen Anregungsstrahlengang des Mikroskops eingekoppelt. Das zweite Anregungslicht 16 wird von einer Linse 24 in Richtung des halbdurchlässigen Spiegels 25 geleitet. Von diesem halbdurchlässigen Spiegel 25 wird mindestens ein Teil des zweiten Anregungslichts 16 transmittiert und gelangt zusammen mit dem ersten Anregungslicht 13 auf den Hauptfarbteiler 30.

Der Hauptfarbteiler 30 lenkt das erste Anregungslicht 13 und das zweite Anregungslicht 16 über den Scanner 40 in Richtung des Mikroskopobjektivs 50. Mit Hilfe des Scanners werden das erste Anregungslicht 13 und das zweite Anregungslicht 16 auf jeweils dieselben Probenbereiche der Probe 70 geführt. In Reaktion auf das Einstrahlen des ersten und des zweiten Anregungslichts, im Folgenden allgemein als Anregungslicht bezeichnet, strahlt die Probe 70 Licht ab, wobei es sich insbesondere um Fluoreszenzlicht handeln kann, welches im Vergleich zu dem Anregungslicht eine größere Wellenlänge oder, mit anderen Worten, eine kleinere Energie, aufweist. Dieses von der Probe 70 abgestrahlte Licht wird über dieselben optischen Komponenten, also über das Mikroskopobjektiv 50, den Scanner 40 bis zum Hauptfarbteiler 30 geleitet.

Jedenfalls die Komponenten des von der Probe 70 abgestrahlten Lichts, die eine größere Wellenlänge als das eingestrahlte Anregungslicht aufweisen, werden von dem Hauptfarbteiler 30 transmittiert und über eine Linse 60 auf ein konfokales Pinhole 61 fokussiert. Die durch das konfokale Pinhole 61 hindurchtretende Strahlung wird über eine Linse 63 auf einen Strahlteiler 64 geleitet, der das von der Probe abgestrahlte Licht noch einmal spektral aufteilt. Die beiden entstehenden Anteile werden dann auf einen ersten Detektor 92 und einen zweiten Detektor 94 in der Detektionseinheit 90 geleitet. Dem Detektor 92 ist dabei ein Filter 93 und dem Detektor 94 ein Filter 95 vorgeordnet. Die Filter 93 und 95 dienen zum Herausfiltern von unerwünschten spektralen Komponenten. Die Ausgänge der Detektoren 92 und 94 sind mit einer Auswerteeinheit 80, wobei es sich typischerweise um einen Computer handelt, verbunden. Mit einem Mikroskop 100 in der in Fig. 3 gezeigten Art können Messungen durchgeführt werden, wie sie zuvor mit Bezug auf Fig. 1 und Fig. 2 beschrieben wurden.

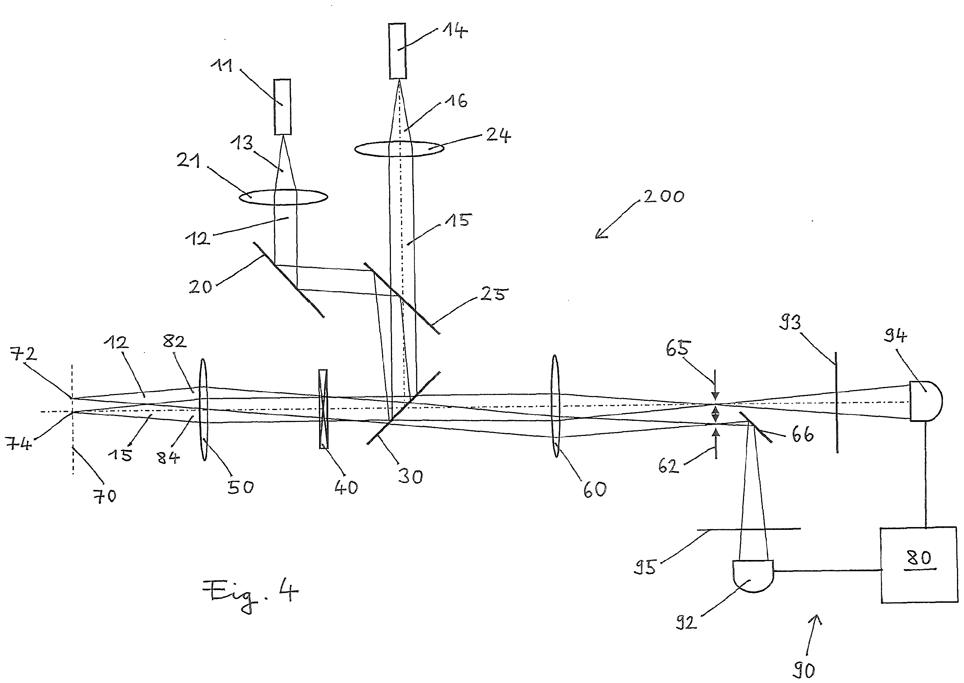

Ein Beispiel eines Mehrfarben-Scanning-Mikroskops 200 wird mit Bezug auf Fig. 4 erläutert.

Generell sind gleich oder gleichwirkende Komponenten in den Figuren jeweils mit denselben Bezugszeichen gekennzeichnet. Im Folgenden werden nur die jeweils unterschiedlichen Merkmale, die für die jeweiligen Ausführungsbeispiele charakteristisch sind, beschrieben.

Abweichend von dem Mikroskop 100 aus dem Stand der Technik in Fig. 3 sind bei dem Mikroskop 200 in Fig. 4 die Einkoppelmittel 20, 25, also der Spiegel 20 und der halbdurchlässige Spiegel 25 so positioniert und angeordnet, dass das erste Anregungsstrahlbündel 12 und das zweite Anregungsstrahlbündel 15 unter verschiedenen Winkeln in den Anregungsstrahlengang eingekoppelt werden. Dies hat zur Folge, dass das erste Anregungsstrahlbündel 12 und das zweite Anregungsstrahlbündel 15 auch unter einem unterschiedlichen Winkel auf den Hauptfarbteiler 30, den Scanner 40 und das Mikroskopobjektiv 50 treffen und letztendlich auf unterschiedliche Probenbereiche, die auch als Probenorte bezeichnet werden können, der Probe 70 fokussiert werden. So wird das erste Anregungsstrahlbündel 12 auf einen ersten Probenbereich 72 und das zweite Anregungsstrahlbündel 15 auf einen zweiten Probenbereich 74 fokussiert. Das vom ersten Probenbereich 72 abgestrahlte Licht 82 wird im Detektionsstrahlengang durch dieselben optischen Komponenten, also das Mikroskopobjektiv 50 und den Scanner 40 zurück zum Hauptfarbteiler 30 geführt, welcher wiederum die spektralen Anteile mit niedrigerer Energie transmittiert. Im Anschluss gelangt das von dem ersten Probenort 72 abgestrahlte Licht 82 über die Linse 60, ein konfokales Pinhole 62, einen Spiegel 66 und einen Filter 95 auf den Detektor 92. Ganz entsprechend wird das von dem zweiten Probenort 74 abgestrahlte Licht 84 über das Mikroskopobjektiv 50, den Scanner 40, den Hauptfarbteiler 30, die Linse 60, ein konfokales Pinhole 65 und einen Filter 93 auf den zweiten Detektor 94 geleitet.

Wesentlich ist bei dem in Fig. 43 gezeigten Beispiel, dass die Einkoppelmittel 20, 25 so verändert sind, dass das erste Anregungsstrahlbündel 12 und das zweite Anregungsstrahlbündel 15 unter einem unterschiedlichen Winkel in den Anregungsstrahlengang eingekoppelt werden und letzten Endes auf unterschiedliche Probenorte, nämlich den ersten Probenort 72 und den zweiten Probenort 74 fokussiert werden. Außerdem ist von Bedeutung, dass die von diesen unterschiedlichen Probenorten als Antwort oder Response auf das jeweils unterschiedliche Anregungslicht abgestrahlte Strahlung 82, 84 mit Hilfe von unterschiedlichen

Detektoren, nämlich dem ersten Detektor 92 und dem zweiten Detektor 94, nachgewiesen wird.

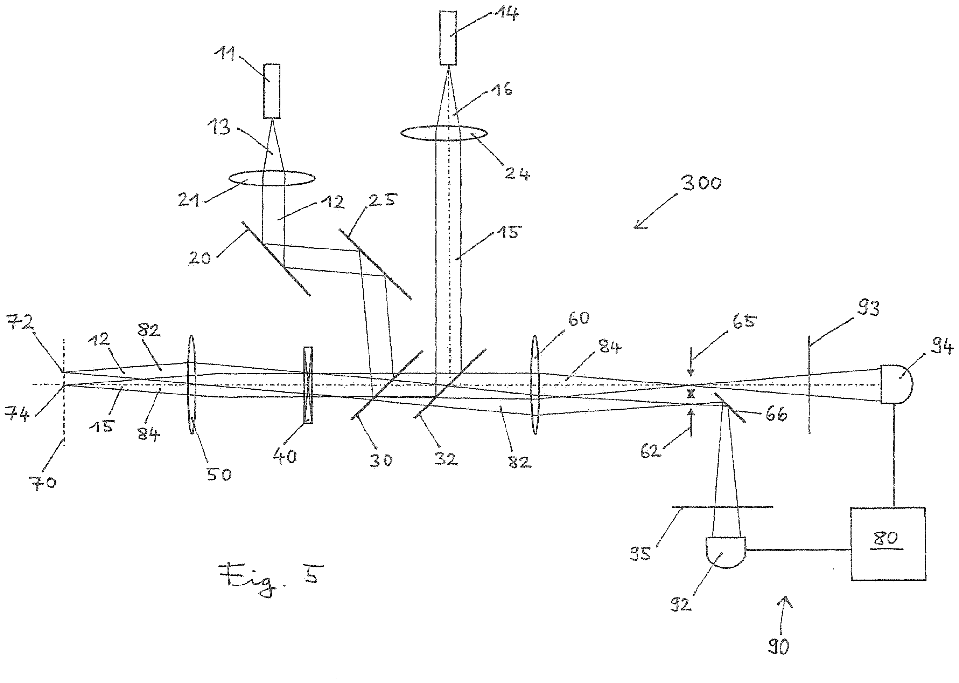

Eine zweite Variante eines Mehrfarben-Scanning-Mikroskops 300 wird im Zusammenhang mit Fig. 5 beschrieben. Der wesentliche Unterschied des Beispiels aus Fig. 5 im Vergleich zu dem Beispiel aus Fig. 4 besteht darin, dass das erste Anregungsstrahlbündel 12 und das zweite Anregungsstrahlbündel 15 nicht mehr mit ein- und demselben ersten Hauptfarbteiler 30 eingekoppelt werden, sondern dass das erste Anregungsstrahlbündel 12 mit dem ersten Hauptfarbteiler 30 und das zweite Anregungsstrahlbündel 15 mit einem zweiten Hauptfarbteiler 32 in den Strahlengang eingekoppelt wird. Die Einkoppelmittel 20, 25 sind hierzu entsprechend abweichend von dem in Fig. 4 gezeigten Aufbau positioniert, nämlich so, dass das zweite Anregungsstrahlbündel 15 nicht mehr durch den Spiegel 25 durchtreten muss. Der Spiegel 25 kann deshalb im Beispiel aus Fig. 5 auch ein vollreflektierender Spiegel sein. Im Prinzip wird durch die beschriebene Maßnahme der Verwendung eines zweiten Hauptfarbteilers 32 im Hinblick auf das Generieren von unterschiedlichen Brennpunkten auf der Probe 70 weitgehend dasselbe erreicht wie bei dem in Fig. 4 dargestellten Beispiel.

Die Unterschiede sind im praktischen Betrieb zu sehen. Während für das Beispiel aus Fig. 4 allgemein für jede Kombination einer ersten Lichtquelle 11 und einer zweiten Lichtquelle 14 ein geeigneter spezieller erster Hauptfarbteiler 30 notwendig ist, ist das bei dem Beispiel aus Fig. 5 nicht mehr erforderlich. Prinzipiell könnte dort die zweite Lichtquelle 14 mit dem zweiten Hauptfarbteiler 32 durch eine andere Lichtquelle, die Anregungslicht einer anderen, unterschiedlichen Wellenlänge aussendet, und einen anderen Hauptfarbteiler ersetzt werden. Im Hinblick auf den Nachweis des von dem ersten Probenort 72 und dem zweiten Probenort 74 abgestrahlten Lichts 82, 84 mit Hilfe des ersten Detektors 92 und des zweiten Detektors 94 bestehen bei dem Beispiel aus Fig. 5 keine Unterschiede im Vergleich zur Variante aus Fig. 4.

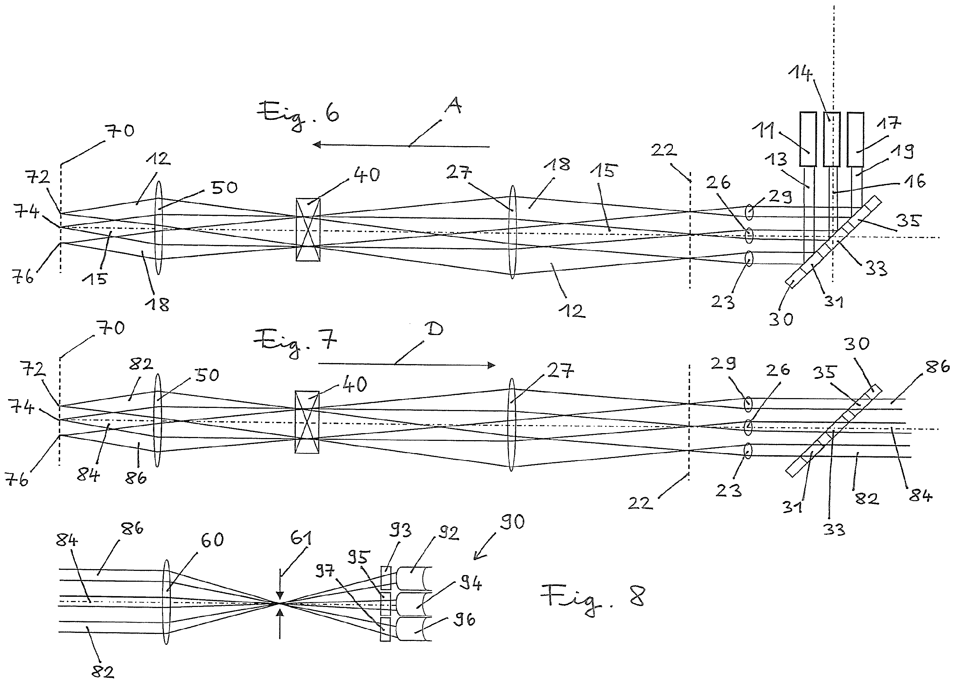

Ein Ausführungsbeispiel eines erfindungsgemäßen Mehrfarben-Scanning-Mikroskops wird schließlich mit Bezug auf die Figuren 6, 7 und 8 erläutert. Dabei zeigt Fig. 6 den wesentlichen Teil des Anregungsstrahlengangs, Fig. 7 einen ersten Teil des Detektionsstrahlengangs D und Fig. 8 einen zweiten Teil des Detektionsstrahlengangs D.

Bei der in Fig. 6 gezeigten Variante ist neben der ersten Lichtquelle 11 und der zweiten Lichtquelle 14 eine weitere, dritte Lichtquelle 17 vorhanden, welche ein weiteres, drittes Anregungslichtbündel 18 mit drittem Anregungslicht 19 aussendet, welches eine dritte Wellenlänge aufweist, die von der ersten und der zweiten Wellenlänge verschieden ist.

Der wesentliche Unterschied des in Fig. 6 gezeigten Ausführungsbeispiels im Vergleich zu den bisher beschriebenen Varianten besteht darin, dass ein segmentierter erster Hauptfarbteiler 30 verwendet wird. Der Hauptfarbteiler 30 weist ein erstes Segment 31, ein zweites Segment 33 und ein drittes Segment 35 auf. Dabei dient das erste Segment 31 zum Einkoppeln des ersten Anregungslichts 13, das zweite Segment 33 zum Einkoppeln des zweiten Anregungslichts 16 und das dritte Segment 35 zum Einkoppeln des dritten Anregungslichts 19. Die Geometrie der Strahlengänge ist im Einzelnen aus Fig. 6 ersichtlich. Mit Hilfe von jeweils, insbeondere separaten, Linsen 23, 26, 29, deren optische Achsen zueinander parallel verschoben sind, werden diese Anregungslichtbündel zunächst in eine erste Brenneben 22 fokussiert und gelangen von dort über eine weitere Linse 27 auf den Scanner 40 und von dort auf das Mikroskopobjektiv 50, von dem die Anregungslichtbündel 12, 15, 18 auf einen ersten Probenort 72, einen zweiten Probenort 74 beziehungsweise einen dritten Probenort 76 fokussiert werden.

Als Antwort oder Response auf die Bestrahlung mit dem Anregungslicht strahlen die Probenorte 72, 74, 76 Licht 82, 84, 86 ab, wie in Fig. 7 für den Detektionsstrahlengang D dargestellt. Das von den Probenorten 72, 74, 76 abgestrahlte Licht 82, 84, 86 legt sodann, wie bei den im Zusammenhang mit den Figuren 4 und 5 erläuterten Ausführungsbeispielen prinzipiell denselben optischen Weg zurück bis zum ersten Hauptfarbteiler 30. Dort werden die Anteile der Lichtbündel 82, 84, 86 mit niedrigerer Energie oder höherer Wellenlänge durch die Segmente 31, 33 beziehungsweise 35 transmittiert.

Fig. 8 schließlich zeigt wie das von den Probenorten 72, 74, 76 abgestrahlte Licht 82, 84, 86 mit einer Linse 60 auf ein konfokales Pinhole 61 fokussiert wird und von dort über Filter 93, 95, 97 auf Detektoren 92, 94, 96 fällt. Wesentlich für die vorliegende Erfindung ist wiederum, dass jeweils verschiedene Probenbereiche 72, 74, 76 mit Anregungslicht unterschiedlicher Wellenlänge beleuchtet werden und das von diesen Probenbereichen 72, 74, 76 zurückgestrahltes Licht 82, 84, 86 wiederum von jeweils unterschiedlichen Detektoren 92, 94, 96 nachgewiesen wird. Die Besonderheit des Ausführungsbeispiels der Figuren 6 bis 8 ist, dass das nachzuweisende, von den verschiedenen Probenorten 72, 74, 76 abgestrahlte Licht 82, 84, 86 durch ein- und dasselbe Pinhole 61 geleitet wird. Das Pinhole 61 wird also besser ausgenutzt.

In dem in den Figuren 4 bis 8 dargestellten Beispiel wird die Verwendung eines gemeinsamen Pinholes 61 durch die separaten Linsen 23, 26, 29 ermöglicht. Diese kollimieren, wie insbesondere aus Fig. 7 ersichtlich, die in der Zwischenbildebene 22 einkommenden Strahlenbündel, die auf die Probenorte 72, 74, 76 zurückgehen, auf jeweils zueinander parallele Strahlenbündel 82, 84, 86 rechts von dem Strahlteiler 30 in Fig. 7 sowie ganz links in Fig. 8. Der Umstand, dass die Strahlbündel 82, 84, 86 zueinander parallel sind, ermöglicht, dass diese Strahlbündel von der Linse 60 auf das gemeinsame Pinhole 61 fokussiert werden können.

### BEZUGSZEICHENLISTE

- A: Anregungsstrahlengang
- D: Detektionsstrahlengang
- a1: Anregungsspektrum DAPI
- a2: Anregungsspektrum FITC
- a3: Anregungsspektrum Alexa 488
- a4: Anregungsspektrum Alexa 647
- e1: Emissionsspektrum DAPI
- e2: Emissionsspektrum FITC
- e3: Emissionsspektrum Alexa 488
- e4: Emissionsspektrum Alexa 647
- λ: Wellenlänge
- 11: ersten Lichtquelle
- 12: erstes Anregungsstrahlbündel
- 13: erstes Anregungslicht
- 14: zweite Lichtquelle
- 15: zweites Anregungsstrahlbündel
- 16: zweites Anregungslicht
- 17: weitere Lichtquelle
- 18: weiteres Anregungslichtbündel
- 19: weiteres Anregungslicht
- 20: Einkoppelmittel
- 21: Linse
- 22: Fokalebene
- 23: Linse
- 24: Linse
- 25: weitere Einkoppelmittel
- 26: Linse
- 27: Linse
- 29: Linse
- 30: erster Hauptfarbteiler
- 31: erstes Segment des ersten Hauptfarbteilers 30
- 32: zweiter Hauptfarbteiler
- 33: zweites Segment des ersten Hauptfarbteilers 30
- 35: drittes Segment des ersten Hauptfarbteilers 30
- 40: Scanner
- 30, 40, 50: Optikmittel
- 50: Mikroskopobjektiv
- 60: Linse
- 61: Pinhole
- 62: Pinhole
- 63: Linse
- 64: Strahlteiler
- 65: Pinhole
- 66: Spiegel
- 70: Probe
- 72: erster Probenort
- 74: zweiten Probenort
- 76: weitere Probenorte
- 80: Auswerteeinheit
- 82: von dem Probenort 72 abgestrahltes Detektionslicht
- 84: von dem Probenort 74 abgestrahltes Detektionslicht
- 86: von dem Probenort 76 abgestrahltes Detektionslicht
- 90: Detektionseinheit
- 92: erster Detektor
- 93: Filter
- 94: zweiter Detektor
- 95: Filter
- 96: dritter Detektor
- 97: Filter
- 100: Mehrfarben-Scanning-Mikroskop
- 200: Mehrfarben-Scanning-Mikroskop
- 300: Mehrfarben-Scanning-Mikroskop

## Patentansprüche

1. Mehrfarben-Scanning-Mikroskop
mit mindestens einer Lichtquelle zum Aussenden von Anregungslicht, mit Einkoppelmitteln (20) zum Einkoppeln eines ersten Anregungsstrahlbündels (12) und eines zweiten Anregungsstrahlbündels (15) des Anregungslichts in einen Anregungsstrahlengang (A),
mit Optikmitteln (30, 40, 50) zum Leiten des ersten Anregungsstrahlbündels (12) und des zweiten Anregungsstrahlbündels (15) zu einer Probe (70) und zum Leiten von von der Probe (70) abgestrahltem Detektionslicht (82, 84) in einem Detektionsstrahlengang (D) zu einer Detektionseinheit (90), wobei die Optikmittel mindestens folgende Bestandteile aufweisen:
mindestens einen Hauptfarbteiler (30) zum Trennen des Anregungslichts einerseits von dem von der Probe (70) abgestrahlten Detektionslicht (82, 84) andererseits,
einen Scanner (40) zum Abrastern der Probe (70) mit dem Anregungslicht,
ein Mikroskopobjektiv (50) zum Fokussieren des Anregungslichts auf oder in die Probe (70) und zum Leiten des von der Probe (70) abgestrahlten Detektionslichts (82, 84) in Richtung der Detektionseinheit (90) und
mit der Detektionseinheit (90) zum Nachweisen des von der Probe (70) abgestrahlten Detektionslichts (82, 84),
wobei die Einkoppelmittel (20) und mindestens Teile der Optikmittel (30, 40, 50) dergestalt eingerichtet und angeordnet sind, dass das erste Anregungsstrahlbündel (12) auf einen ersten Probenort (72) und das zweite Anregungsstrahlbündel (15) auf einen zweiten Probenort (74) geleitet wird, der von dem ersten Probenort (72) verschieden ist,
wobei die Detektionseinheit (90) zum Nachweisen des von dem ersten Probenort (72) abgestrahlten Lichts (82) einen ersten Detektor (92) und zum Nachweisen des von dem zweiten Probenort (74) abgestrahlten Lichts (84) einen zweiten Detektor (94) aufweist,
wobei das von dem ersten Probenort (72) abgestrahlte Licht (82) und das von dem zweiten Probenort (74) abgestrahlte Licht (84) und gegebenenfalls das von weiteren Probenorten abgestrahlte Licht durch ein und dieselbe gemeinsame Lochblende (61) hindurchtreten,
**dadurch gekennzeichnet,**
**dass** mindestens eine erste Lichtquelle (11) zum Aussenden des ersten Anregungsstrahlbündels (12) mit erstem Anregungslicht (13) einer ersten Wellenlänge und eine zweite Lichtquelle (14) zum Aussenden des zweiten Anregungsstrahlbündels (15) mit zweitem Anregungslicht (16) einer zweiten Wellenlänge vorhanden sind,
**dass** die erste Wellenlänge von der zweiten Wellenlänge verschieden ist,
**dass** das erste Anregungsstrahlbündel (12) mit einem ersten Hauptfarbteiler (30) und das zweite Anregungsstrahlbündel (15) mit einem zweiten Hauptfarbteiler (32) in den Anregungsstrahlengang (A) eingekoppelt wird und
**dass** der erste Probenort (72) und der zweite Probenort (74) mit spektral unterschiedlichem Anregungslicht beaufschlagt werden.

2. Mehrfarben-Scanning-Mikroskop nach Anspruch 1,
**dadurch gekennzeichnet,**
**dass** das erste Anregungsstrahlbündel (12) in einem ersten Winkel in den Anregungsstrahlengang (A) eingekoppelt wird und
**dass** das zweite Anregungsstrahlbündel (15) in einem zweiten Winkel, der sich von dem ersten Winkel unterscheidet, in den Anregungsstrahlengang (A) eingekoppelt wird.

3. Mehrfarben-Scanning-Mikroskop nach Anspruch 1 oder 2,
**dadurch gekennzeichnet,**
**dass** der erste Hauptfarbteiler (30) als Einkoppelmittel mindestens zum Einkoppeln des ersten Anregungsstrahlbündels (12) in den Anregungsstrahlengang (A) ein erstes Segment (31) und zum Einkoppeln des zweiten Anregungsstrahlbündels (15) in den Anregungsstrahlengang (A) ein zweites Segment (33) aufweist.

4. Mehrfarben-Scanning-Mikroskop nach einem der Ansprüche 1 bis 3,
**dadurch gekennzeichnet,**
**dass** mindestens eine weitere Lichtquelle (17) vorhanden ist zum Aussenden eines weiteren Anregungslichtbündels (18) mit weiterem Anregungslicht (19), dessen Wellenlänge oder Wellenlängen von der ersten Wellenlänge und der zweiten Wellenlänge verschieden ist oder sind und
**dass** für das oder die weiteren Anregungslichtbündel (18) weitere Einkoppelmittel (35) vorhanden sind, die zusammen mit mindestens Teilen den Optikmitteln (30, 40, 60) dergestalt eingerichtet und positioniert sind,
**dass** das oder die weiteren Anregungslichtbündel (18) auf weitere jeweils unterschiedliche Probenorte (76) fokussierbar ist oder sind, der oder die verschieden ist oder sind von dem ersten Probenort (72), auf den das erste Anregungslichtbündel (12) fokussierbar ist, und dem zweiten Probenort (74) auf den das zweite Anregungslichtbündel (15) fokussierbar ist.

5. Mehrfarben-Scanning-Mikroskop nach einem der Ansprüche 1 bis 4,
**dadurch gekennzeichnet,**
**dass** zum getrennten Nachweisen von Detektionslicht (82, 84, 86), welches von verschiedenen Probenorten (72, 74, 76) zurückgestrahlt wird, mindestens eine der Anzahl der Anregungsstrahlbündel entsprechende Anzahl von Detektoren (92, 94, 96) vorhanden ist.

6. Mehrfarben-Scanning-Mikroskop nach einem der Ansprüche 1 bis 5,
**dadurch gekennzeichnet,**
**dass** die erste Lichtquelle ein Argon-Ionen-Laser mit einer ersten Wellenlänge von 488 nm und die zweite Lichtquelle ein DPSS-Laser mit einer zweiten Wellenlänge von 561 nm ist.

7. Mehrfarben-Scanning-Mikroskop nach einem der Ansprüche 1 bis 6,
**dadurch gekennzeichnet,**
**dass** der erste Hauptfarbteiler einen oder mehrere Notch-Filter aufweist.

8. Mehrfarben-Scanning-Mikroskop nach einem der Ansprüche 1 bis 7,
**dadurch gekennzeichnet,**
**dass** für jedes in den Anregungsstrahlengang (A) einzukoppelnde Anregungsstrahlbündel ein separater Scanner vorhanden ist.

9. Mehrfarben-Scanning-Mikroskop nach einem der Ansprüche 1 bis 8,
**dadurch gekennzeichnet,**
**dass** der Scanner (40) in einer Pupille des Mikroskopobjektivs (50) positioniert ist.

10. Mehrfarben-Scanning-Mikroskop nach einem der Ansprüche 1 bis 9,
**dadurch gekennzeichnet,**
**dass** zum Auswerten der von den Detektoren (92, 94, 96) gelieferten Messdaten eine Auswerteeinheit (80) vorhanden ist.

11. Mehrfarben-Scanning-Mikroskop nach einem der Ansprüche 1 bis 10, welches ein konfokales Mikroskop ist.

12. Mehrfarben-Scanning-Mikroskop nach einem der Ansprüche 1 bis 11,
**dadurch gekennzeichnet,**
**dass** die gemeinsame Lochblende (61) vor, insbesondere unmittelbar vor, dem ersten und dem zweiten, insbesondere allgemein vor den unterschiedlichen verwendeten Detektoren, und besonders bevorzugt in einer Zwischenbildebene des Detektionsstrahlengangs, positioniert ist.

13. Mehrfarben-Scanning-Mikroskop nach einem der Ansprüche 1 bis 12,
**dadurch gekennzeichnet,**
**dass** für jedes Anregungslichtbündel im Anregungsstrahlengang und/oder für jedes Detektionslichtbündel im Detektionsstrahlengang jeweils separate optische Mittel, insbesondere mindestens eine separate Linse (23, 26, 29), vorhanden sind, wobei die optischen Achsen der separaten optischen Mittel, insbesondere der separaten Linsen (23, 26, 29) für unterschiedliche Anregungslichtbündel und/ oder Detektionslichtbündel, insbesondere zueinander parallel verschoben sind.

## Claims

1. Multi-color scanning microscope,
having at least one light source for emitting excitation light,
having coupling-in means (20) for coupling-in a first excitation beam (12) and a second excitation beam (15) of the excitation light into an excitation beam path (A),
having optical means (30, 40, 50) for guiding the first excitation beam (12) and the second excitation beam (15) to a specimen (70) and for guiding detection light (82, 84) emitted by the specimen (70) in a detection beam path (D) to a detection unit (90),
wherein the optical means have at least the following components:
at least one main color splitter (30) for separating the excitation light on the one hand from the detection light (82, 84) emitted by the specimen (70) on the other hand,
a scanner (40) for scanning the specimen (70) with the excitation light,
a microscope objective (50) for focussing the excitation light onto or into the specimen (70) and for guiding the detection light (82, 84) emitted by the specimen (70) in the direction of the detection unit (90), and
having the detection unit (90) for detecting the detection light (82, 84) emitted by the specimen (70),
wherein the coupling-in means (20) and at least parts of the optical means (30, 40, 50) are set up and arranged in such a way that the first excitation beam (12) is guided onto a first specimen location (72) and the second excitation beam (15) is guided onto a second specimen location (74) which differs from the first specimen location (72),
wherein the detection unit (90) has a first detector (92) for detecting the light (82) emitted by the first specimen location (72) and has a second detector (94) for detecting the light (84) emitted by the second specimen location (74),
wherein the light (82) emitted by the first specimen location (72) and the light (84) emitted by the second specimen location (74) and possibly the light emitted by further specimen locations pass through one and the same common pinhole (61),
**characterized in**
**that** at least one first light source (11) for emitting a first excitation beam (12) with first excitation light (13) of a first wavelength and a second light source (14) for emitting a second excitation beam (15) with second excitation light (16) of a second wavelength are present,
**that** the first wavelength differs from the second wavelength,
**that** the first excitation beam (12) is coupled-in with the first main color splitter (30) and the second excitation beam (15) is coupled-in with a second main color splitter (32) into the excitation beam path (A) and
**that** spectrally different excitation light is radiated onto the first first specimen location (72) and the second specimen location (74).

2. Multi-color scanning microscope according to claim 1,
**characterised in that**
the first excitation beam (12) is coupled-in at a first angle into the excitation beam path (A) and
the second excitation beam (15) is coupled-in at a second angle which differs from the first angle into the excitation beam path (A).

3. Multi-color scanning microscope according to claim 1 or 2,
**characterised in that**
the first main color splitter (30) has a first segment (31) as coupling-in means at least for coupling-in the first excitation beam (12) into the excitation beam path (A), and has a second segment (33) for coupling-in the second excitation beam (15) into the excitation beam path (A).

4. Multi-color scanning microscope according to one of claims 1 to 3,
**characterised in that**
at least one further light source (17) is provided for emitting a further excitation beam (18) with further excitation light (19), of which the wavelength(s) is / are different from the first wavelength and the second wavelength, and further coupling-in means (35) are provided for the further excitation beam(s) (18) and are set up and positioned together with at least parts of the optical means (30, 40, 60) in such a way that
the further excitation beam(s) (18) can be focussed onto further respectively different specimen locations (76), which is / are different from the first specimen location (72), onto which the first excitation beam (12) can be focussed, and the second specimen location (74), onto which the second excitation beam (15) can be focussed.

5. Multi-color scanning microscope according to one of claims 1 to 4,
**characterised in that**
for the separate detection of detection light (82, 84, 86) which is radiated back by different specimen locations (72, 74, 76), at least a number of detectors (92, 94, 96) corresponding to the number of excitation beams are provided.

6. Multi-color scanning microscope according to one of claims 1 to 5,
**characterised in that**
the first light source is an argon-ion laser having a first wavelength of 488 nm and the second light source is a DPSS laser having a second wavelength of 561 nm.

7. Multi-color scanning microscope according to one of claims 1 to 6,
**characterised in that**
the first main color splitter has one or more notch filters.

8. Multi-color scanning microscope according to one of claims 1 to 7,
**characterised in that**
a separate scanner is provided for each excitation beam to be coupled into the excitation beam path (A).

9. Multi-color scanning microscope according to one of claims 1 to 8,
**characterised in that**
the scanner (40) is positioned in a pupil of the microscope objective (50).

10. Multi-color scanning microscope according to one of claims 1 to 9,
**characterised in that**
an evaluation unit (80) is provided to evaluate the measurement data supplied by the detectors (92, 94, 96).

11. Multi-color scanning microscope according to one of claims 1 to 10, which is a confocal microscope.

12. Multi-color scanning microscope according to one of claims 1 to 11
**characterised in that**
the common pinhole (61) is positioned in front of, in particular directly in front of, the first and the second, in particular generally in front of the different detectors used, and particularly preferably in an intermediate image plane of the detection beam path.

13. Multi-color scanning microscope according to one of claims 1 to 12,
**characterised in that**
respectively separate optical means, in particular at least one separate lens (23, 26, 29), are provided for each excitation beam in the excitation beam path and / or for each detection beam in the detection beam path, wherein the optical axes of the separate optical means, in particular of the separate lenses (23, 26, 29), are displaced, in particular parallel to each other, for different excitation beams and / or detection beams.

## Revendications

1. Microscope à balayage polychrome
avec au moins une source lumineuse destinée à émettre une lumière d'excitation,
avec des moyens d'injection (20) destinés à injecter un premier faisceau de rayons d'excitation (12) et un deuxième faisceau de rayons d'excitation (15) de la lumière d'excitation dans un trajet de rayons d'excitation (A),
avec des moyens optiques (30, 40, 50) destinés à guider le premier faisceau de rayons d'excitation (12) et le deuxième faisceau de rayons d'excitation (15) vers un échantillon (70) et à guider la lumière de détection (82, 84) émise par l'échantillon (70) dans un trajet de rayons de détection (D) vers une unité de détection (90),
dans lequel les moyens optiques présentent au moins les composants suivants :
au moins un séparateur principal de couleurs (30) destiné à séparer la lumière d'excitation d'une part de la lumière de détection (82, 84) émise par l'échantillon (70) d'autre part,
un scanner (40) destiné à balayer l'échantillon (70) avec la lumière d'excitation,
un objectif de microscope (50) destiné à focaliser la lumière d'excitation sur ou dans l'échantillon (70) et à guider la lumière de détection (82, 84) émise par l'échantillon (70) en direction de l'unité de détection (90) et
avec l'unité de détection (90) destinée à détecter la lumière de détection (82, 84) émise par l'échantillon (70),
dans lequel les moyens d'injection (20) et au moins des parties des moyens optiques (30, 40, 50) sont conçus et disposés de telle sorte que le premier faisceau de rayons d'excitation (12) est guidé sur un premier site d'échantillon (72) et le deuxième faisceau de rayons d'excitation (15) sur un deuxième site d'échantillon (74) qui est différent du premier site d'échantillon (72),
dans lequel l'unité de détection (90), pour détecter la lumière (82) émise par le premier site d'échantillon (72), présente un premier détecteur (92), et pour détecter la lumière (84) émise par le deuxième site d'échantillon (74), présente un deuxième détecteur (94),
dans lequel la lumière (82) émise par le premier site d'échantillon (72) et la lumière (84) émise par le deuxième site d'échantillon (74) et éventuellement la lumière émise par d'autres sites d'échantillon passent à travers un même sténopé (61) commun,
**caractérisé en ce**
**qu'**au moins une première source lumineuse (11) destinée à émettre le premier faisceau de rayons d'excitation (12) avec une première lumière d'excitation (13) d'une première longueur d'onde et une deuxième source lumineuse (14) destinée à émettre le deuxième faisceau de rayons d'excitation (15) avec une deuxième lumière d'excitation (16) d'une deuxième longueur d'onde sont présentes,
**que** la première longueur d'onde est différente de la deuxième longueur d'onde,
**que** le premier faisceau de rayons d'excitation (12) est injecté avec un premier séparateur principal de couleurs (30) et le deuxième faisceau de rayons d'excitation (15) avec un deuxième séparateur principal de couleurs (32) dans le trajet de rayons d'excitation (A) et
**que** le premier site d'échantillon (72) et le deuxième site d'échantillon (74) sont soumis à l'effet d'une lumière d'excitation spectralement différente.

2. Microscope à balayage polychrome selon la revendication 1,
**caractérisé en ce**
**que** le premier faisceau de rayons d'excitation (12) est injecté dans le trajet de rayons d'excitation (A) selon un premier angle et
**que** le deuxième faisceau de rayons d'excitation (15) est injecté dans le trajet de rayons d'excitation (A) selon un deuxième angle qui se différencie du premier angle.

3. Microscope à balayage polychrome selon la revendication 1 ou 2,
**caractérisé en ce**
**que** le premier séparateur principal de couleurs (30) présente en tant que moyen d'injection, au moins pour injecter le premier faisceau de rayons d'excitation (12) dans le trajet de rayons d'excitation (A), un premier segment (31), et pour injecter le deuxième faisceau de rayons d'excitation (15) dans le trajet de rayons d'excitation (A), un deuxième segment (33).

4. Microscope à balayage polychrome selon l'une quelconque des revendications 1 à 3,
**caractérisé en ce**
**qu'**au moins une autre source lumineuse (17), destinée à émettre un autre faisceau de lumière d'excitation (18) avec une autre lumière d'excitation (19) dont la longueur d'onde ou les longueurs d'onde est ou sont différente(s) de la première longueur d'onde et de la deuxième longueur d'onde, est présente, et que pour le ou les autres faisceaux de lumière d'excitation (18), d'autres moyens d'injection (35) sont présents, qui sont conçus et positionnés conjointement avec au moins des parties des moyens optiques (30, 40, 60) de telle sorte
**que** le ou les autres faisceaux de lumière d'excitation (18) peut ou peuvent être focalisé(s) sur d'autres sites d'échantillon (76) respectivement différents, qui est ou sont différent(s) du premier site d'échantillon (72) sur lequel le premier faisceau de rayons d'excitation (12) peut être focalisé, et du deuxième site d'échantillon (74) sur lequel le deuxième faisceau de lumière d'excitation (15) peut être focalisé.

5. Microscope à balayage polychrome selon l'une quelconque des revendications 1 à 4,
**caractérisé en ce**
**que**, pour la détection séparée d'une lumière de détection (82, 84, 86), laquelle est réfléchie par différents sites d'échantillon (72, 74, 76), au moins un nombre de détecteurs (92, 94, 96) correspondant au nombre des faisceaux de rayons d'excitation est présent.

6. Microscope à balayage polychrome selon l'une quelconque des revendications 1 à 5,
**caractérisé en ce**
**que** la première source lumineuse est un laser à argon ionisé avec une première longueur d'onde de 488 nm et la deuxième source lumineuse un laser solide à pompage par diode avec une deuxième longueur d'onde de 561 nm.

7. Microscope à balayage polychrome selon l'une quelconque des revendications 1 à 6,
**caractérisé en ce**
**que** le premier séparateur principal de couleurs présente un ou plusieurs filtres coupe-bande.

8. Microscope à balayage polychrome selon l'une quelconque des revendications 1 à 7,
**caractérisé en ce**
**que**, pour chaque faisceau de rayons d'excitation à injecter dans le trajet de rayons d'excitation (A), un scanner séparé est présent.

9. Microscope à balayage polychrome selon l'une quelconque des revendications 1 à 8,
**caractérisé en ce**
**que** le scanner (40) est positionné dans une pupille de l'objectif de microscope (50).

10. Microscope à balayage polychrome selon l'une quelconque des revendications 1 à 9,
**caractérisé en ce**
**que**, pour évaluer les données de mesure fournies par les détecteurs (92, 94, 96), une unité d'évaluation (80) est présente.

11. Microscope à balayage polychrome selon l'une quelconque des revendications 1 à 10,
lequel est un microscope confocal.

12. Microscope à balayage polychrome selon l'une quelconque des revendications 1 à 11,
**caractérisé en ce**
**que** le sténopé (61) commun est positionné devant, en particulier immédiatement devant le premier et le deuxième, en particulier généralement devant les différents détecteurs utilisés, et de manière particulièrement préférée dans un plan d'image intermédiaire du trajet de rayons de détection.

13. Microscope à balayage polychrome selon l'une quelconque des revendications 1 à 12,
**caractérisé en ce**
**que**, pour chaque faisceau de lumière d'excitation dans le trajet de rayons d'excitation et/ou pour chaque faisceau de lumière de détection dans le trajet de rayons de détection, respectivement des moyens optiques séparés, en particulier au moins une lentille (23, 26, 29) séparée, sont présents, dans lequel les axes optiques des moyens optiques séparés, en particulier des lentilles (23, 26, 29) séparées, pour différents faisceaux de lumière d'excitation et/ou faisceaux de lumière de détection, sont en particulier déplacés parallèlement les uns aux autres.
